(19) Europäisches Patentamt / European Patent Office / Office européen des brevets

(11) **EP 3 646 493 B1**

(12) **EUROPÄISCHE PATENTSCHRIFT**

(45) Veröffentlichungstag und Bekanntmachung des Hinweises auf die Patenterteilung:
**26.07.2023 Patentblatt 2023/30**

(21) Anmeldenummer: **18731037.0**

(22) Anmeldetag: **08.06.2018**

(51) Internationale Patentklassifikation (IPC):
**H04J 3/06** (2006.01)      **H04L 43/08** (2022.01)
**B60W 50/02** (2012.01)

(52) Gemeinsame Patentklassifikation (CPC):
**H04J 3/0664; H04J 3/0667; H04J 3/14;**
**H04L 43/0858; H04L 43/0864; H04L 45/02;**
**H04L 63/123; H04W 4/48;** H04L 2012/40273;
H04L 2463/121

(86) Internationale Anmeldenummer:
**PCT/EP2018/065159**

(87) Internationale Veröffentlichungsnummer:
**WO 2019/001929 (03.01.2019 Gazette 2019/01)**

(54) **VERFAHREN, COMPUTER-LESBARES MEDIUM, SYSTEM, UND FAHRZEUG UMFASSEND DAS SYSTEM ZUM VALIDIEREN EINER ZEITFUNKTION EINES MASTERS UND DER CLIENTS IN EINEM NETZWERK EINES FAHRZEUGS**

METHOD, COMPUTER-READABLE MEDIUM, SYSTEM, AND VEHICLE COMPRISING THE SYSTEM FOR VALIDATING A TIME FUNCTION OF A MASTER AND THE CLIENTS IN A NETWORK OF A VEHICLE

PROCÉDÉ, SUPPORT LISIBLE PAR ORDINATEUR, SYSTÈME, ET VÉHICULE COMPRENANT LE SYSTÈME POUR LA VALIDATION D'UNE FONCTION TEMPORELLE D'UN MAÎTRE ET DU CLIENT DANS UN RÉSEAU D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2017 DE 102017210895**

(43) Veröffentlichungstag der Anmeldung:
**06.05.2020 Patentblatt 2020/19**

(73) Patentinhaber: **Bayerische Motoren Werke Aktiengesellschaft**
**80809 München (DE)**

(72) Erfinder:
• **TURNER, Max**
**80798 München (DE)**
• **MAIER, Alexander**
**85416 Langenbach (DE)**
• **BOGENBERGER, Florian**
**85586 Poing (DE)**
• **HUDOLETNJAK, Emily**
**81739 München (DE)**

(56) Entgegenhaltungen:
**DE-A1-102011 087 472     US-A1- 2010 019 811**

• **NOSEWORTHY BOB: "Network-based application-independent time-error and direct port latency measurement", 2016 IEEE INTERNATIONAL SYMPOSIUM ON PRECISION CLOCK SYNCHRONIZATION FOR MEASUREMENT, CONTROL, AND COMMUNICATION (ISPCS), IEEE, 4. September 2016 (2016-09-04), Seiten 1-6, XP032971423, DOI: 10.1109/ISPCS.2016.7579511 [gefunden am 2016-09-28]**
• **Patrick Wunner ET AL: "Development and Testing of Automotive Ethernet-Networks together in one Tool - OMNeT", , 3. September 2014 (2014-09-03), XP055499947, Gefunden im Internet: URL:https://arxiv.org/pdf/1409.1026.pdf**

- **BOB NOSEWORTHY ET AL: "Passive and Active Probing of Slave Timing Error for 802.1AS 2015-11-11 ; as-ren-probing-slave-te-proposal-1115-v06" , IEEE DRAFT; AS-REN-PROBING-SLAVE-TE-PROPOSAL-1115 -V06, IEEE-SA, PISCATAWAY, NJ USA, Bd. 802, Nr. v06, 10. November 2015 (2015-11-10), Seiten 1-28, XP068101371, [gefunden am 2015-11-10]**

**Beschreibung**

Die Erfindung betrifft ein Verfahren zum Validieren einer Zeitfunktion eines Masters und der Clients in einem Netzwerk eines Fahrzeugs. Die Erfindung betrifft ferner ein Computer-lesbares Medium, ein System, sowie ein Fahrzeug umfassend das System zum Validieren einer Zeitfunktion eines Masters und der Clients in einem Netzwerk des Fahrzeugs.

Aus dem Stand der Technik sind verschiedene, standardisierte Verfahren zur Zeitsynchronisation in Netzwerken bekannt. Beispielsweise beschreibt das Precision-Time-Protocol, kurz PTP, ein Zeitsynchronisationsverfahren, das beispielsweise in IEEE 1588 und IEEE802.1AS standardisiert ist. Das PTP sieht vor, Nachrichten zur Zeitsynchronisation unidirektional von einem Sender an einen Empfänger zu übermitteln. Dem Sender liegen keine Informationen vor, ob die Nachrichten zur Zeitsynchronisation korrekt bei einem Empfänger empfangen und verarbeitet wurden. Eine korrekte Funktionsweise eines Gesamtsystems im Sinne einer Funktionssicherheit nach ISO 26262 kann mittels der bekannten Zeitsynchronisationsverfahren daher nicht erreicht werden.

Das Dokument mit dem Titel "Network-based application-independent time-error and direct port latency measurement" von Bob Noseworthy (IEEE International Symposium on Precision Clock Synchronization for Measurement, Control, and Communication (ISPCS), IEEE, 4. September 2016, Seiten 1-6, XP032971423; DOI: 10.1109/ISPCS.216.7579511) beschreibt ein System, bei ein Link-Partner auf einem Pfad mit einer bekannten Verzögerung und Asymmetrie direkt einen Zeitfehler eines Slave-PTP-Geräts beobachten kann.

Die Patentanmeldung DE 10 2011 087472 A1 beschreibt ein Verfahren zur Synchronisation von Uhren in Knoten eines Fahrzeugnetzes eines Kraftfahrzeugs, in dem die Knoten über ein nicht per se synchronisiertes Kommunikationsprotokoll miteinander kommunizieren. Bei dem Verfahren sendet ein Master-Knoten mit einer Master-Uhr Synchronisations-Telegramme aus, die in einem Slave-Knoten mit Slave-Uhr ausgewertet werden, wobei der Takt des Slave-Knotens bzw. der Slave-Uhr an den Takt des Master-Knotens bzw. der Master-Uhr angepasst wird.

Das Dokument mit dem Titel "Development and Testing of Automotive Ethernet-Networks together in one Tool - OMNeT++" von Patrick Wunner et al (3. September 2014, XP055499947) beschreibt ein Netzwerksimulationswerkzeug zum Entwickeln und Testen von Fahrzeug-Ethernet-Netzwerken.

Die Patentanmeldung US 2010/019811 A1 beschreibt ein System und ein Verfahren zum schnellen byzantinisch-fehlertoleranten, selbst-stabilisierenden Uhrsynchronisation.

Der Foliensatz mit dem Titel "Passive and Active Probing of Slave Timing Error for 802.1AS" von Bob Noseworthy et al (IEEE Draft, AS-REN-PROBING-SLAVE-TE-PROPOSAL-1115-V06, IEEE-SA, Piscataway, NJ USA, Bd. 802, Nr. v06, 20. November 2015, Seiten 1-28, XP068101371) beschreibt ein echtzeitfähiges, netzwerkbasiertes, anwendungsunabhängiges Monitoring von Zeitfehlern in einem TSN.

Es ist daher eine Aufgabe der Erfindung, ein Validieren einer Zeitfunktion in einem Netzwerk eines Fahrzeugs effizient zu verbessern.

Gelöst wird diese Aufgabe durch die Merkmale der unabhängigen Ansprüche. Vorteilhafte Ausgestaltungen und Weiterbildungen der Erfindung ergeben sich aus den abhängigen Ansprüchen.

Gemäß einem ersten Aspekt zeichnet sich die Erfindung aus durch ein Verfahren zum Validieren einer Zeitfunktion in einem Netzwerk eines Fahrzeugs. Das Netzwerk kann CAN, FlexRay, und/oder Ethernet sein. Die Zeitfunktion kann eine Zeitabbildung umfassen, die eine gemessene Zeit in eine synchronisierte Zeit umwandelt bzw. eine gemessene Zeit auf eine synchronisierte Zeit abbildet. Das Fahrzeug kann ein Landfahrzeug, z.B. ein Kraftfahrzeug oder ein Motorrad sein. Das Verfahren umfasst ein Ermitteln einer Empfangszeit einer Sync-Nachricht eines Masters zur Synchronisation einer Zeitinformation durch einen ersten Client, wobei der erste Client, im Folgenden auch Validator genannt, mit dem Master über einen ersten Kommunikationskanal verbunden ist. Der Master kann ein Gerät oder eine Komponente des Netzwerks sein, mit der der erste Client über den ersten Kommunikationskanal verbunden ist. Der Master kann ein Grand-Master sein, d.h. ein Master, der in einer Hierarchie von Mastern einem Wurzelelement entspricht, oder ein Sub-Master sein, d.h. ein Master, der in der Hierarchie von Mastern unterhalb dem Wurzelelement angeordnet ist. Beispielsweise kann eine Bridge des Netzwerks ein Sub-Master sein. Der erste Kommunikationskanal kann beispielsweise das Precision-Time-Protocol, kurz PTP, bereitstellen. Die Sync-Nachricht ist vorzugsweise eine Nachricht, die periodisch und/oder ereignisgesteuert von einem Master an einen Client, z.B. den ersten Client, übermittelt wird. Das Verfahren umfasst weiterhin ein Empfangen einer Follow-Up-Nachricht des Masters über den ersten Kommunikationskanal durch den ersten Client, wobei die Follow-Up-Nachricht eine Sendezeit der Sync-Nachricht am Master umfasst. Die Follow-Up-Nachricht ist vorzugsweise eine Nachricht, die auf eine Sync-Nachricht des Masters folgt und von dem Master an den ersten Client übermittelt wird.

Das Verfahren umfasst ein Ermitteln einer Empfangszeit einer weiteren Sync-Nachricht des Masters durch den ersten Client, und ein Empfangen einer weiteren Follow-Up-Nachricht des Masters über den ersten Kommunikationskanal durch den ersten Client, wobei die weitere Follow-Up-Nachricht eine Sendezeit der weiteren Sync-Nachricht umfasst. Das Verfahren bestimmt eine Zeitfunktion des ersten Client basierend auf der Empfangszeit der Sync-Nachricht, der Empfangszeit der weiteren Sync-Nachricht, der Sendezeit der Follow-Up-Nachricht und der Sendezeit der weiteren Follow-Up-Nachricht. Die Zeitfunktion des ersten Client kann eine gemessene Zeit des ersten Client auf eine synchronisierte Zeit abbilden. Allgemein kann eine Zeitfunktion eines Geräts des Netzwerks, eine auf dem Gerät gemessene Zeit auf eine synchronisierte Zeit des Netzwerks abbilden. Eine Zeit kann beispielsweise eine Sendezeit oder eine Empfangszeit einer Nachricht sein.

Das Verfahren umfasst ferner ein Ermitteln einer synchronisierten Sendezeit einer Path-Delay-Request-Nachricht von dem ersten Client an den Master mittels der Zeitfunktion des Client, ein Ermitteln einer synchronisierten Empfangszeit einer Path-Delay-Response-Nachricht von dem Master mittels der Zeitfunktion des Client, und ein Empfangen eines Path-Delay-Response-Follow-Up-Nachricht von dem Master durch den ersten Client, wobei die Path-Delay-Response-Follow-Up-Nachricht eine synchronisierte Empfangszeit der Path-Delay-Request-Nachricht und eine synchronisierte Sendezeit der Path-Delay-Response-Nachricht umfasst. Weiterhin umfasst das Verfahren ein Validieren einer Zeitfunktion des Masters basierend auf der synchronisierten Sendezeit der Path-Delay-Request-Nachricht an dem ersten Client, der synchronisierten Empfangszeit der Path-Delay-Response-Nachricht an dem ersten Client, der synchronisierten Empfangszeit der Path-Delay-Request-Nachricht an dem Master, der synchronisierten Sendezeit der Path-Delay-Response-Nachricht an dem Master, und einer vorgegebenen maximalen Verzögerung zwischen dem ersten Client und dem Master. Die vorgegebene maximale Verzögerung umfasst erfindungsgemäss eine Verzögerung in der Kommunikation der Nachrichten über den ersten Kommunikationskanal zwischen dem Master und dem ersten Client sowie zwischen dem ersten Client und dem Master.

Vorteilhafterweise kann der erste Client durch das Validieren der synchronisierten Sende- und Empfangszeiten des ersten Clients und des Masters bewerten, ob die Zeitfunktion des Masters valide ist, d.h. ob die von dem Client bestimmten Sende- und Empfangszeiten mit den von dem Master an den ersten Client übermittelten Send- und Empfangszeiten gleich sind oder sich zumindest innerhalb eines vorgegebenen Zeitintervalls befinden. Durch das Verwenden einer maximalen Verzögerung als Obergrenze kann sichergestellt werden, dass die synchronisierten Sende- und Empfangszeiten des Masters durch den Client validiert werden können.

Gemäß einer vorteilhaften Ausgestaltung kann das Verfahren weiterhin ein Empfangen einer Validierungsanfragenachricht eines zweiten Clients, im Folgenden auch kurz Client genannt, über einen zweiten Kommunikationskanal durch den ersten Client umfassen. Der zweite Kommunikationskanal ist vorzugsweise ein Kommunikationskanal, der ein im Vergleich zu dem ersten Kommunikationskanal ein verschiedenes Kommunikationsprotokoll verwendet. Beispielsweise kann der zweite Kommunikationskanal ein SOME/IP-Kommunikationsproktokoll verwenden. Die Validierungsanfragenachricht kann folgende Zeitinformationen zwischen dem zweiten Client und einem dem zweiten Client zugehörigen Master umfassen: eine synchronisierte Sendezeit einer Path-Delay-Request-Nachricht, eine synchronisierte Empfangszeit einer Path-Delay-Response-Nachricht, eine synchronisierte Empfangszeit einer Path-Delay-Request-Nachricht, und eine synchronisierte Sendezeit einer Path-Delay-Response-Nachricht. Das Verfahren kann ferner ein Bestimmen einer maximalen Verzögerung zwischen dem zweiten Client und dem zweiten Client zugehörigen Master basierend auf einer vorgegebenen Netzwerktopologie durch den ersten Client, und ein Validieren einer Zeitfunktion des dem zweiten Client zugehörigen Master basierend auf der synchronisierten Sendezeit der Path-Delay-Request-Nachricht, der synchronisierten Empfangszeit der Path-Delay-Response-Nachricht, der synchronisierten Empfangszeit der Path-Delay-Request-Nachricht, der synchronisierten Sendezeit der Path-Delay-Response-Nachricht, und der bestimmten maximalen Verzögerung umfassen. Hiermit kann ein vorzugsweise zentraler Client, z.B. der erste Client, auf Anfrage die Zeitfunktion eines anderen Clients, z.B. des zweiten Clients, validieren. Ein Client des Netzwerks kann somit stets prüfen, ob die Zeitfunktion des Clients selbst und/oder des dazugehörigen Masters valide ist. Ferner kann durch das Validieren unter Verwendung der Netzwerktopologie eine Position des Clients und des Masters im Netzwerk bestimmt werden und ausgehend von der Position des Clients und des Masters die maximale Verzögerung abgeleitet werden.

Gemäß einer weiteren, vorteilhaften Ausgestaltung kann das Verfahren weiterhin ein Übermitteln eines Ergebnisses des Validierens der Zeitfunktion des Masters und/oder des dem zweiten Client zugehörigen Masters an eine oder mehrere sicherheitsrelevante Funktionen durch den ersten Client, und/oder ein Ausführen der einen oder mehreren sicherheitsrelevanten Funktionen unter Verwendung des Ergebnisses des Validierens der Zeitfunktion. Hiermit kann eine sicherheitsrelevante Funktion auf validen Zeitinformationen ausgeführt werden. Ist beispielsweise die sicherheitsrelevante Funktion eine Funktion zum Fusionieren von Sensordaten, kann die sicherheitsrelevante Funktion hiermit sicherstellen, dass die Zeitinformationen der Sensordaten valide sind.

Erfindungsgemäss umfasst das Verfahren weiterhin ein Prädizieren einer synchronisierten Empfangszeit einer Sync-Nachricht des Masters durch den ersten Client unter Verwendung der Zeitfunktion des ersten Clients, und ein Validieren der Zeitfunktion des ersten Clients. Das Validieren der Zeitfunktion des ersten Clients kann bestimmen, ob die prädizierte, synchronisierte Empfangszeit der Sync-Nachricht zuzüglich der vorgegebenen, maximale Verzögerung zwischen dem ersten Client und dem Master einen Wert ergibt, der innerhalb eines vorgegebenen Intervallbereichs um die in der Follow-Up-Nachricht beinhaltete Sendezeit des Masters liegt. Falls der Wert innerhalb des vorgegebenen Intervallbereichs liegt, kann das Verfahren die Zeitfunktion des ersten Client als valide bestimmen. Falls der Wert nicht innerhalb des vorgegebenen Intervallbereichs liegt, kann das Verfahren die Zeitfunktion des ersten Client als nicht valide bestimmen, und die Zeitfunktion des ersten Client basierend auf der Empfangszeit der Sync-Nachricht, der Empfangszeit der weiteren Sync-Nachricht, der Sendezeit der Follow-Up-Nachricht und der Sendezeit der weiteren Follow-Up-Nachricht aktualisieren. Hiermit kann der erste Client, d.h. der Validator, seine eigene Zeitfunktion effizient validieren und gegebenenfalls aktualisieren.

Gemäß einer weiteren, vorteilhaften Ausgestaltung kann das Verfahren eine weitere Validierungsanfragenachricht des zweiten Clients über den zweiten Kommunikationskanal empfangen. Die weitere Validierungsanfragenachricht zwischen dem zweiten Client und einem dem zweiten Client zugehörigen Master umfasst folgende Zeitinformationen: eine prädizierte Empfangszeit einer Sync-Nachricht zwischen dem zweiten Client und dem zweiten Client zugehörigen Master und eine synchronisierte Sendezeit der Sync-Nachricht zwischen dem zweiten Client und dem zweiten Client zugehörigen Master. Vorzugsweise bestimmt der zweite Client die synchronisierte Sendezeit der Sync-Nachricht aus einer Follow-Up-Nachricht des dem zweiten Client zugehörigen Masters. Das Verfahren kann die Zeitfunktion des zweiten Clients durch den ersten Client validieren, wobei das Validieren der Zeitfunktion des zweiten Clients bestimmt, ob die prädizierte Empfangszeit der Sync-Nachricht des zweiten Clients zuzüglich einer vorgegebenen, maximale Verzögerung zwischen dem zweiten Client und dem dazugehörigen Master einen Wert ergibt, der innerhalb eines vorgegebenen Intervallbereichs um die synchronisierte Sendezeit der Sync-Nachricht des dem zweiten Clients zugehörigen Masters liegt. Falls der Wert innerhalb des vorgegebenen Intervallbereichs liegt, kann das Verfahren die Zeitfunktion des zweiten Client als valide bestimmen. Falls der Wert nicht innerhalb des vorgegebenen Intervallbereichs liegt, kann das Verfahren die Zeitfunktion des zweiten Client als nicht valide bestimmen und ein Ergebnis des Validierens der Zeitfunktion des zweiten Clients an eine oder mehrere sicherheitsrelevante Funktionen durch den ersten Client übermitteln. Hiermit kann der erste Client, d.h. der Validator, die Zeitfunktion eines beliebigen anderen Clients des Netzwerks, z.B. den zweiten Cleint, effizient validieren und das Ergebnis an sicherheitsrelevante Funktionen des Fahrzeugs, z.B. Komponenten und/oder Verfahren zur Sensordatenfusion, weiterleiten.

Gemäß einer weiteren, vorteilhaften Ausgestaltung kann das Validieren der synchronisierten Zeiten bestimmen, ob die synchronisierte Sendezeit der Path-Delay-Request-Nachricht zuzüglich der vorgegebenen, maximalen Verzögerung einen ersten Wert ergibt, der innerhalb eines vorgegebenen Intervallbereichs um die synchronisierte Empfangszeit der Path-Delay-Request-Nachricht liegt, und bestimmen, ob die synchronisierte Sendezeit der Path-Delay-Response-Nachricht zuzüglich der vorgegebenen, maximalen Verzögerung einen zweiten Wert ergibt, der innerhalb des vorgegebenen Intervallbereichs um die synchronisierte Empfangszeit der Path-Delay-Response-Nachricht liegt. Falls der erste Wert und der zweite Wert innerhalb der jeweiligen Intervallbereiche liegen, kann die Zeitfunktion des Masters als valide bestimmt werden. Falls der erste Wert und/oder der zweite Wert nicht innerhalb der jeweiligen Intervallbereiche liegen, kann die Zeitfunktion des Masters als nicht valide bestimmt werden. Hiermit kann die Zeitfunktion des Masters effizient durch den Client, insbesondere durch den ersten Client, validiert werden.

Gemäß einer weiteren, vorteilhaften Ausgestaltung kann das Netzwerk ein Ethernet-Netzwerk, sein, kann der zweite Client ein Client oder eine vorzugsweise Time-Aware Bridge sein, und/oder kann der Master ein Grand-Master oder ein Sub-Master sein.

Gemäß einem weiteren Aspekt zeichnet sich die Erfindung aus durch ein Computer-lesbares Medium zum Validieren einer Zeitfunktion eines Masters in einem Netzwerk eines Fahrzeugs, wobei das Computer-lesbare Medium Instruktionen umfasst, die, wenn ausgeführt auf einem Computer oder einem Steuergerät, das oben beschriebene Verfahren ausführen.

Gemäß einem weiteren Aspekt zeichnet sich die Erfindung aus durch ein System zum Validieren einer Zeitfunktion eines Masters in einem Netzwerk eines Fahrzeugs, wobei das System dazu ausgebildet ist, das oben beschriebene Verfahren auszuführen.

Gemäß einem weiteren Aspekt zeichnet sich die Erfindung aus durch ein Fahrzeug umfassend das oben beschriebene System zum Validieren einer Zeitfunktion eines Masters in einem Netzwerk eines Fahrzeugs.

Weitere Merkmale der Erfindung ergeben sich aus den Ansprüchen, den Figuren und der Figurenbeschreibung.

Im Folgenden wird anhand der beigefügten Zeichnungen ein bevorzugtes Ausführungsbeispiel der Erfindung beschrieben. Daraus ergeben sich weitere Details, bevorzugte Ausgestaltungen und Weiterbildungen der Erfindung. Im Einzelnen zeigen schematisch

Fig. 1    ein beispielhaftes System zum Validieren einer Zeitfunktion,

Fig. 2    ein beispielhaftes Verfahren zum Berechnen einer Zeitfunktion, und

Fig. 3    ein beispielhaftes Verfahren zum Bestimmen einer Verzögerung in einem Netzwerk.

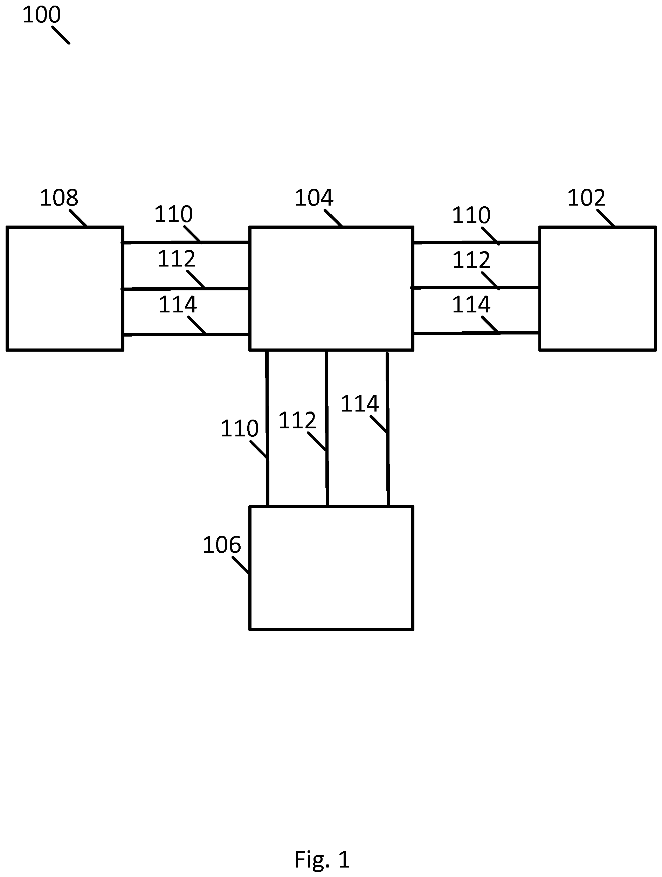

Im Detail zeigt Fig. 1 ein System 100 zum Validieren einer Zeitfunktion in einem Netzwerk eines Fahrzeugs. Das Netzwerk ist vorzugsweise ein Ethernet-Netzwerk. Das in Fig. 1 gezeigte, beispielhafte System 100 umfasst einen Grand-Master 102, eine Bridge 104, einen Validator 106, und einen Client 108. Der Validator 106 ist in dem System 100 ein Client der Bridge 104. Jeder Client und jede Bridge kann eine lokale, nichtsynchrone Uhr umfassen. Die lokale, nichtsynchrone Uhr kann eine präzise Sendezeit für Nachrichten, die von einem Client oder einer Bridge gesendet werden, und eine präzise Empfangszeit für Nachrichten, die von einem Client oder einer Bridge empfangen werden, ermitteln. Ferner hat jeder Client und jede Bridge als Client eine Zeitfunktion, die eine Abbildung einer lokalen, nichtsynchronen Zeit T auf eine synchronisierte Zeit t eines jeweiligen Masters ausführt.

Der Grand-Master 102 ist eine Netzwerkkomponente, die eine Uhrzeit an Clients des Grand-Masters 102 verteilt. In Fig. 1 hat der Grand-Master einen Client, die Bridge 104, an die der Grand-Master 102 die Uhrzeit verteilt. Die Uhrzeit, die der Grand-Master 102 verteilt kann mit t(R) angegeben werden, wobei R die real vergangene Zeit bezeichnet. Die real vergangene Zeit R kann als physikalisch absolut angesehen werden. Jedoch kann die real vergangene Zeit R durch den Grand-Master 102 nicht exakt gemessen werden. Aus diesem Grund verteilt der Grand-Master 102 die Zeit t(R), d.h. eine Uhrzeit in Abhängigkeit der real vergangenen Zeit R anstatt die real vergangene Zeit R selbst. Der Grand-Master 102 ist ein Master bzw. eine Masterkomponente des Netzwerks.

Das System 100 kann eine Bridge 104 umfassen, die ein Client oder ein Sub-Master sein kann. Ein Sub-Master ist ein Master, der eine von der Uhrzeit des Grand-Masters 102 abgeleitete Zeit, insbesondere eine mit dem Grand-Master 102 synchronisierte Zeit, an Clients des Masters verteilt. Beispielsweise ist die Bridge 104 ein Client des Grand-Masters 102. Weiter kann die Bridge 104 beispielsweise ein Sub-Master für Clients der Bridge 104 sein. Wie in Fig. 1 gezeigt, hat die Bridge 104 zwei Clients, den Validator 106 und den Client 108.

Der Validator 106 kann im Sinne der ISO 26262 sicher, engl. safe, validieren, ob ein Client, z.B. Client 108, oder eine Bridge, z.B. Bridge 104, des Netzwerks sich mittels PTP auf die gleiche Zeit synchronisiert haben. Das Validator 106 ist vorzugsweise ein Client der Bridge 104. Der Validator 106 weist einen vorgegebenen ASIL-Level, z.B. ASIL-D, auf. Der Client 108, die Bridge 106, und/oder der Grand-Master 102 müssen daher keinen vorgegebenen ASIL-Level erfüllen.

Als Client der Bridge 104 kann der Validator 106 eine lokale, nichtsynchrone Zeit T der lokalen, nichtsynchronen Uhr mit einer synchronisierten Zeit t der Bridge 104 als (Sub-)Master synchronisieren 110. Dazu kann der Validator 106 eine Zeitfunktion t'v(T) berechnen, mit der eine Abbildung der lokalen, nicht-synchronisierten Zeit T des Validators 106 auf die synchronisierte Zeit t der Bridge 104 erfolgt.

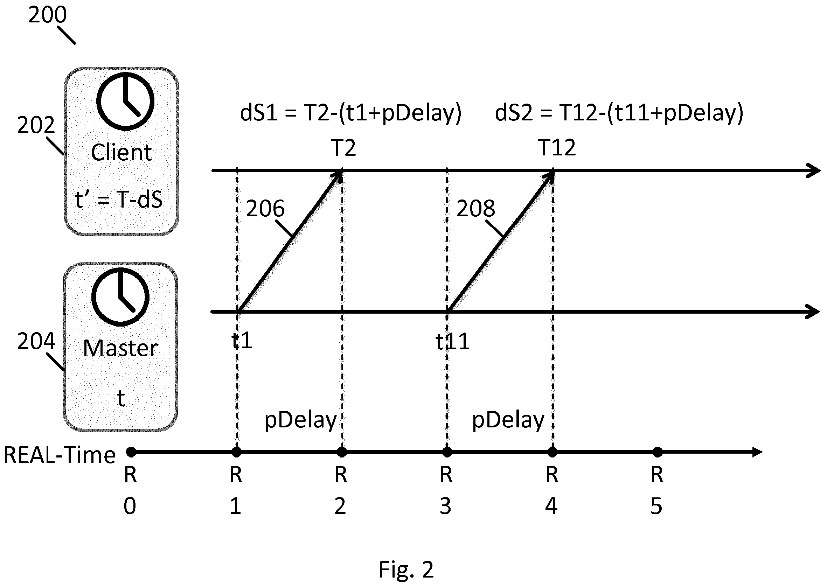

Fig. 2 zeigt ein beispielhaftes Verfahren 200 zum Berechnen der Zeitfunktion t' eines Clients 202 zur Synchronisation der lokalen, nichtsynchronen Zeit mit der Zeit eines Masters 204. Der Client 202 kann der Validator 106, die Bridge 104 als Client, und/oder der Client 108 sein. Der Master 204 kann der Grand-Master 102 und/oder die Bridge 104 als Sub-Master sein.

Der Client 202 kann über einen ersten Kommunikationskanal, z.B. über PTP, die lokale, nichtsynchrone Zeit T mit dem Master 204 synchronisieren. Im Detail kann der Client 202 eine Sync-Nachricht 206 des Masters 204 empfangen und eine Empfangszeit T2 der Sync-Nachricht des Masters ermitteln. Der Client 202 kann ferner eine Follow-Up-Nachricht des Masters empfangen (nicht gezeigt), wobei die Follow-Up-Nachricht eine Sendezeit t1 der Sync-Nachricht am Master umfasst. Mittels der Follow-Up-Nachricht kann der Client 202 die Sendezeit der Sync-Nachricht am Master 204 ermitteln. Der Client 202 kann eine weitere Sync-Nachricht 208 des Masters 204 empfangen und eine Empfangszeit T12 der weiteren Sync-Nachricht des Masters ermitteln. Weiterhin kann der Client 202 eine weitere Follow-Up-Nachricht des Masters 204 empfangen (nicht gezeigt), wobei die weitere Follow-Up-Nachricht eine Sendezeit der weiteren Sync-Nachricht am Master 204 t11 beinhaltet.

Der Client 202 kann eine Zeitfunktion zum Synchronisieren der lokalen, nichtsynchronisierten Uhr basierend auf der Empfangszeit der Sync-Nachricht, der Empfangszeit der weiteren Sync-Nachricht, der Sendezeit der Follow-Up-Nachricht und der Sendezeit der weiteren Follow-Up-Nachricht bestimmen. Im Detail kann der Client 202 einen Korrekturwert dS bestimmen, mit der die lokale, nichtsynchronisierte Zeit T korrigiert werden muss, um die synchronisierte Zeit t' zu erhalten. Der Korrekturwert dS kann wie folgt berechnet werden: dS = T2 - (t1 + pDelay), wobei pDelay eine Verzögerung ist, die bei dem Übermitteln der Nachricht über den ersten Kommunikationskanal auftritt. Die Zeitfunktion des Client 202 t'(T) kann wie folgt ermittelt werden: t'(T) = T - dS. Mittels der berechneten Rate und der ermittelten Zeitfunktion kann der Client 202 eine Prädiktion einer Sendezeit einer empfangenen Sync-Nachricht des Masters 204 vornehmen. Mit dem Empfangen der dazugehörigen Follow-Up-Nachricht des Masters, die die Sendezeit des Masters 204 kann der Client 202 prüfen, ob die mittels der Zeitfunktion prädizierte Zeit des Client 202 synchron zu der tatsächlichen Zeit des Masters 204 ist. Entspricht die prädizierte Sendezeit des Client 202 der tatsächlichen Sendezeit des Masters 204, sind die Zeiten des Clients 202 und des Masters 204 synchron. Ferner kann eine Ratenabweichung dm berechnet werden, welche einen Gangunterschied der nichtsynchronisierte Zeit T des Clients 202 von der synchronisierten Zeit des Masters 204 beschreibt: dm = (T12 - T2) / (t11 - t1). Diese kann verwendet werden, um die prädizierte Zeit des Clients 202 besser zu bestimmen.

Für das Bestimmen der Zeitfunktion kann der Client 202 eine Verzögerung pDelay zwischen dem Client 202 und dem Master 204 bestimmen. Wie in Fig. 1 gezeigt, kann die Verzögerung pDelay zwischen dem Validator 106 als Client und der Bridge 104 als Master, dem Client 108 und der Bridge 104 als Master, sowie der Bridge 104 als Client und dem Grand-Master 102 als Master bestimmt werden 112. Vorzugsweise wird die Verzögerung pDelay über den ersten Kommunikationskanal ermittelt.

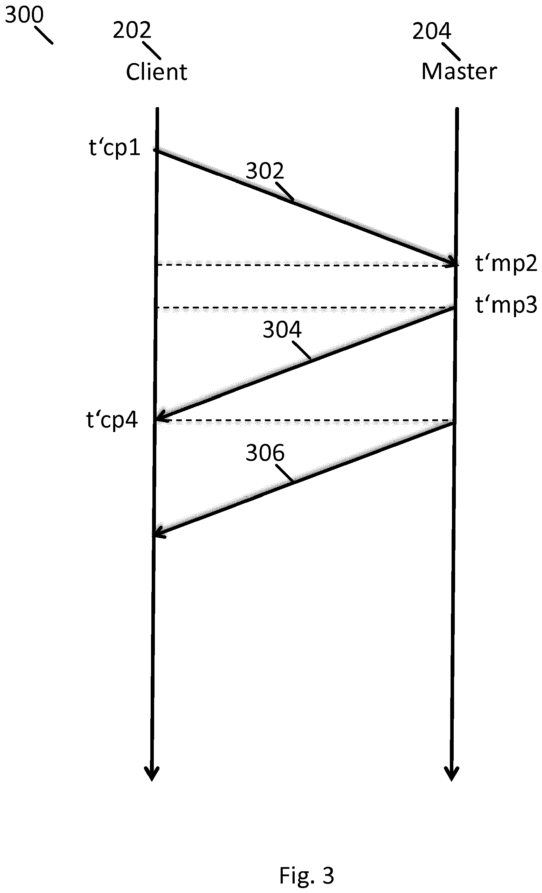

Fig. 3 zeigt ein beispielhaftes Verfahren 300 zum Bestimmen der Verzögerung eines Path-Delay, kurz pDelay, in dem Netzwerk zwischen dem Client 202 und dem Master 204. Der Client 202 kann der Client 108, der Validator 106, und/oder die Bridge 104 als Client sein. Der Master 204 kann die Bridge 104 als Master und/oder der Grand-Master 102 sein. Der Client 202 kann eine Path-Delay-Request-Nachricht 302 erstellen und an den Master 204 senden, mit der ein Bestimmen der Verzögerung initiiert werden kann. Ferner kann der Client 202 eine synchronisierte Sendezeit t'cp1 der Path-Delay-Request-Nachricht 302 an den Master 204 bestimmen. Für das Bestimmen der synchronisierten Sendezeit kann der Client 202 zunächst eine Sendezeit mit der lokalen, nichtsynchronisierten Zeit ermitteln und die Zeitfunktion des Client 202 auf die ermittelte Sendezeit ausführen, um die synchronisierte Sendezeit zu erhalten.

Das Master 204 kann die Path-Delay-Request-Nachricht 302 des Client 202 empfangen und eine synchronisierte Empfangszeit t'mp2 bestimmen. Dazu kann der Master 204 zunächst eine Empfangszeit mit einer lokalen, nichtsynchronisierten Zeit ermittelt und anschließend eine Zeitfunktion des Masters 204 auf die ermittelte Empfangszeit ausführen, um die synchronisierte Empfangszeit zu erhalten. Der Master 204 kann eine Path-Delay-Response-Nachricht 304 erzeugen und an den Client 204 senden. Für die Path-Delay-Response-Nachricht 304 kann der Master 204 eine synchronisierte Sendezeit t'mp3 ermitteln. Analog zum Bestimmen der synchronisierten Empfangszeit, kann der Master 204 die synchronisierte Sendezeit t'mp3 ermitteln. Der Client 202 kann die Path-Delay-Response-Nachricht 304 empfangen und eine synchronisierten Empfangszeit t'cp4 ermitteln. Die synchronisierte Empfangszeit t'cp4 kann der Client 202 ermitteln, in dem der Client 202 eine Empfangszeit mit der lokalen, nichtsynchronisierten Zeit bestimmt und anschließen die Zeitfunktion des Client 202 auf die bestimmte Empfangszeit ausführt.

Weiter kann der Master 204 eine Path-Delay-Response-Follow-Up-Nachricht 306 erzeugen und an den Client 202 senden. Die Path-Delay-Response-Follow-Up-Nachricht 306 enthält die synchronisierte Empfangszeit t'mp2 und die synchronisierte Sendezeit t'mp3 des Masters 204. Der Client 202 kann die Path-Delay-Response-Follow-Up-Nachricht empfangen. Mit dem Empfangen der Path-Delay-Response-Follow-Up-Nachricht des Master 204 hat der Client 202 die synchronisierten Zeiten t'cp1, t'mp2, t'mp3, und t'cp4 bestimmt. Die Verzögerung pDelay kann aus einer Differenz zwischen der synchronisierten Empfangszeit t'mp2 und der synchronisierten Sendezeit t'cp1 sowie aus einer Differenz zwischen der synchronisierten Empfangszeit t'cp4 und der synchronisierten Sendezeit t'mp3 ermittelt werden. Ferner kann der Client eine maximale Verzögerung pDmax auf Basis der synchronisierten Zeiten t'cp1, t'mp2, t'mp3, und t'cp4 bestimmen. Alternativ kann die maximale Verzögerung pDmax des Netzwerks fest vorgegeben sein, z.B. durch einen Konfigurationsparameter des Netzwerks.

Mittels der synchronisierten Zeiten t'cp1, t'mp2, t'mp3, und t'cp4 kann der Client 202 eine Zeitfunktion des Masters 204 validieren. Wie in Fig. 1 gezeigt kann beispielsweise mittels der synchronisierten Zeiten t'cp1, t'mp2, t'mp3, und t'cp4 der Validator 106 als Client 202 die Zeitfunktion der Bridge 104 als Master 204 validieren. Für das Validieren der Zeitfunktion des Masters 204 durch den Client 202 gilt:

1)

$$t'cp1 + pDmax \approx t'mp2$$

und

2)

$$t'mp3 + pDmax \approx t'cp4,$$

wobei pDmax die maximale Verzögerung zwischen dem Client 202 und dem Master 204 ist. Die maximale Verzögerung pDmax des Netzwerks des Fahrzeugs ist vorzugsweise kleiner als 100ns auf Grund der begrenzten Länge der Leitungen in dem Fahrzeug. Beim Bestimmen der synchronisierten Zeiten können kleinere Abweichungen auftreten, die einen exakten Vergleich der synchronisierten Zeiten verhindern. Um diese Abweichungen zu berücksichtigen, kann ein vorgegebenes Intervall definiert sein, das festlegt, wie stark eine Abweichung der synchronisierten Zeiten zwischen dem Client und dem Master sein darf. Dies ermöglicht einen ungefähren Vergleich der synchronisierten Zeiten des Clients 202 mit den synchronisierten Zeiten des Masters 204. Sind die Bedingungen 1) und 2) erfüllt, kann die Zeitfunktion des Masters 204 als korrekt angenommen werden.

Ist der Master 204 beispielsweise eine Bridge 104 mit mehreren Clients 202, z.B. Client 108 und Validator 106, wird davon ausgegangen, dass die Bridge 104 als Master 204 die validierte Zeitfunktion für alle Clients 202 der Bridge 104 anwendet. Ein Validieren der Zeitfunktion der Bridge 104 durch einen Client 202, z.B. Validator 106, ist somit ausreichend, um die Zeitfunktion der Bridge 104 als Master 204 für alle Clients 202 der Bridge 104 zu validieren.

Zusätzlich kann der Validator 106 als Client 202 Validierungsanfragenachrichten von Clients 202, z.B. Client 108 und/oder Bridge 104 als Client 202, empfangen 114. Die Validierungsanfragenachrichten können von dem Validator 106 über einen zweiten Kommunikationskanal empfangen werden. Der zweite Kommunikationskanal ist unterschiedlich zu dem ersten Kommunikationskanal. Beispielsweise kann der zweite Kommunikationskanal SOME/IP für das Übermitteln der Validierungsanfragenachricht verwenden. Das Verwenden des zweiten Kommunikationskanals ermöglicht ein out-of-band Übertragen der Validierungsanfragenachrichten. Des Weiteren können die Validierungsanfragenachrichten zeitunkritisch über den zweiten Kommunikationskanal übertragen werden. Eine Validierungsanfragenachricht eines Clients 202, z.B. Client 108 oder Bridge 104 als Client, an den Validator 106 kann eine synchronisierte Sendezeit einer Path-Delay-Request-Nachricht, eine synchronisierte Empfangszeit einer Path-Delay-Response-Nachricht, eine synchronisierte Empfangszeit einer Path-Delay-Request-Nachricht, und eine synchronisierte Sendezeit einer Path-Delay-Response-Nachricht zwischen einem Client 202 und einem Master 204 umfassen. Weiterhin ist auf dem Validator 106 eine vorgegebene Netzwerktopologie gespeichert. Die Netzwerktopologie weist vorzugsweise eine Baumstruktur auf, ausgehend von dem Grand-Master 102 als Wurzelelement der Topologie. Der Validator 106 kann eine maximale Verzögerung zwischen einem Client 202, von dem die Validierungsanfragenachricht empfangen wurde, und einem zugehörigen Master 204 des Netzwerks basierend auf einer vorgegebenen Netzwerktopologie bestimmen. Basierend auf der synchronisierten Sendezeit der Path-Delay-Request-Nachricht, der synchronisierten Empfangszeit der Path-Delay-Response-Nachricht, der synchronisierten Empfangszeit der Path-Delay-Request-Nachricht, der synchronisierten Sendezeit der Path-Delay-Response-Nachricht, und der bestimmten maximalen Verzögerung kann der Validator 106, wie oben beschrieben, die Zeitfunktion des Masters 204 des anfragenden Clients 202 validieren.

Durch ein iteratives Validieren der Zeitfunktionen der Master 204 durch den Validator 106 kann der Validator 106 sicher im Sinne der ISO 26262 feststellen, dass alle Clients 202 des Netzwerks sich auf die gleiche Zeit synchronisiert haben. Die Zeitsynchronisation kann somit sicher validiert werden, ohne dass eine Sicherheitslast der Client 108, die Bridge 104, und der Grand-Master 102 tragen muss. Die Sicherheitslast wird nur von dem Validator 106 getragen.

Weiterhin kann der Validator 106 eine weitere Validierungsanfragenachricht eines Clients 202, z.B. Client 108 oder Bridge 104 als Client, über den zweiten Kommunikationskanal empfangen 114. Die weitere Validierungsnachricht kann eine prädizierte Empfangszeit einer Sync-Nachricht und eine synchronisierte Sendezeit einer Sync-Nachricht aus einer Follow-Up-Nachricht zwischen einem Client 202 und einem Master 204 umfassen. Der Validator 106 kann die Zeitfunktion eines Clients 202 validieren, indem der Validator 106 bestimmt, ob die prädizierte Empfangszeit der Sync-Nachricht des Clients 202 zuzüglich einer vorgegebenen, maximale Verzögerung zwischen dem Client 202 und dem Master 204 einen Wert ergibt, der innerhalb eines vorgegebenen Intervallbereichs um die synchronisierte Sendezeit der Sync-Nachricht des dem Clients zugehörigen Masters liegt. Falls der Wert innerhalb des vorgegebenen Intervallbereichs liegt, kann der Validator 106 die Zeitfunktion des Clients 202 als valide bestimmen. Falls der Wert nicht innerhalb des vorgegebenen Intervallbereichs liegt, kann der Validator 106 die Zeitfunktion des Clients 202 als nicht valide bestimmen. Vorzugsweise kann der Validator 106 das Ergebnis des Validierens der Zeitfunktion des Clients 202 an eine oder mehrere sicherheitsrelevante Funktionen übermitteln. Durch die weitere Validierungsanfragenachricht kann der Validator 106 effizient Zeitfunktionen von Clients 202 des Netzwerks iterativ validieren bis alle Zeitfunktionen der Clients 202 des Netzwerks validiert wurden.

Bezugszeichenliste

| 100 | System |
| 102 | Grand-Master |
| 104 | Bridge |
| 106 | Validator |
| 108 | Client |
| 110 | Synchronisieren der Zeit über einen ersten Kommunikationskanal |
| 112 | Bestimmen einer Verzögerung über einen ersten Kommunikationskanal |
| 114 | Übermitteln bzw. Empfangen von Validierungsanfragenachrichten über einen zweiten Kommunikationskanal |
| 200 | Verfahren |
| 202 | Client |
| 204 | Master |
| 206 | Sync-Nachricht |
| 208 | Sync-Nachricht |
| 300 | Verfahren |
| 302 | Path-Delay-Request-Nachricht |
| 304 | Path-Delay-Response-Nachricht |
| 306 | Path-Delay-Response-Follow-Up-Nachricht |

**Patentansprüche**

1. Verfahren zum Validieren einer Zeitfunktion in einem Netzwerk eines Fahrzeugs, das Verfahren umfassend:

   Ermitteln einer Empfangszeit einer Sync-Nachricht eines Masters zur Synchronisation einer Zeitinformation durch einen ersten Client, wobei der erste Client mit dem Master über einen ersten Kommunikationskanal verbunden ist;
   Empfangen einer Follow-Up-Nachricht des Masters über den ersten Kommunikationskanal durch den ersten Client, wobei die Follow-Up-Nachricht eine Sendezeit der Sync-Nachricht umfasst;
   Ermitteln einer Empfangszeit einer weiteren Sync-Nachricht des Masters durch den ersten Client;
   Empfangen einer weiteren Follow-Up-Nachricht des Masters über den ersten Kommunikationskanal durch den ersten Client, wobei die weitere Follow-Up-Nachricht eine Sendezeit der weiteren Sync-Nachricht umfasst;

Bestimmen einer Zeitfunktion des ersten Client basierend auf der Empfangszeit der Sync-Nachricht, der Empfangszeit der weiteren Sync-Nachricht, der Sendezeit der Sync-Nachricht der empfangenen Follow-Up-Nachricht und der Sendezeit der weiteren Sync-Nachricht der empfangenen, weiteren Follow-Up-Nachricht;

Ermitteln einer synchronisierten Sendezeit einer Path-Delay-Request-Nachricht von dem ersten Client an den Master mittels der Zeitfunktion des Client;

Ermitteln einer synchronisierten Empfangszeit einer Path-Delay-Response-Nachricht von dem Master mittels der Zeitfunktion des Client;

Empfangen eines Path-Delay-Response-Follow-Up-Nachricht von dem Master durch den ersten Client, wobei die Path-Delay-Response-Follow-Up-Nachricht eine synchronisierte Empfangszeit der Path-Delay-Request-Nachricht und eine synchronisierte Sendezeit der Path-Delay-Response-Nachricht umfasst;

Validieren einer Zeitfunktion des Masters basierend auf der synchronisierten Sendezeit der Path-Delay-Request-Nachricht an dem Client, der synchronisierten Empfangszeit der Path-Delay-Response-Nachricht an dem Client, der synchronisierten Empfangszeit der Path-Delay-Request-Nachricht an dem Master, der synchronisierten Sendezeit der Path-Delay-Response-Nachricht an dem Master, und einer vorgegebenen, maximalen Verzögerung zwischen dem ersten Client und dem Master,

Prädizieren einer synchronisierten Empfangszeit einer Sync-Nachricht des Masters durch den ersten Client unter Verwendung der Zeitfunktion des ersten Client;

Validieren der Zeitfunktion des ersten Client, wobei das Validieren der Zeitfunktion des ersten Client umfasst:

Bestimmen, ob die prädizierte, synchronisierte Empfangszeit der Sync-Nachricht zuzüglich einer, vorgegeben, maximalen Verzögerung zwischen dem ersten Client und dem Master einen Wert ergibt, der innerhalb eines vorgegebenen Intervallbereichs um die in der Follow-Up-Nachricht beinhaltete Sendezeit des Masters liegt; und

Falls der Wert innerhalb des vorgegebenen Intervallbereichs liegt:

Bestimmen der Zeitfunktion des ersten Client als valide;

Falls der Wert nicht innerhalb des vorgegebenen Intervallbereichs liegt:

Bestimmen der Zeitfunktion des ersten Client als nicht valide; und

Aktualisieren der Zeitfunktion des ersten Client basierend auf der Empfangszeit der Sync-Nachricht, der Empfangszeit der weiteren Sync-Nachricht, der Sendezeit der Follow-Up-Nachricht und der Sendezeit der weiteren Follow-Up-Nachricht.

2. Verfahren nach Anspruch 1, das Verfahren weiterhin umfassend:

Empfangen einer Validierungsanfragenachricht eines zweiten Client über einen zweiten Kommunikationskanal durch den ersten Client, wobei die Validierungsanfragenachricht folgende Zeitinformationen zwischen dem zweiten Client und einem dem zweiten Client zugehörigen Master umfasst:

eine synchronisierte Sendezeit einer Path-Delay-Request-Nachricht;
eine synchronisierte Empfangszeit einer Path-Delay-Response-Nachricht;
eine synchronisierte Empfangszeit einer Path-Delay-Request-Nachricht; und
eine synchronisierte Sendezeit einer Path-Delay-Response-Nachricht;

Bestimmen einer maximalen Verzögerung zwischen dem zweiten Client und dem zweiten Client zugehörigen Master basierend auf einer vorgegebenen Netzwerktopologie durch den ersten Client; und

Validieren einer Zeitfunktion des dem zweiten Client zugehörigen Master basierend auf der synchronisierten Sendezeit der Path-Delay-Request-Nachricht, der synchronisierten Empfangszeit der Path-Delay-Response-Nachricht, der synchronisierten Empfangszeit der Path-Delay-Request-Nachricht, der synchronisierten Sendezeit der Path-Delay-Response-Nachricht, und der bestimmten maximalen Verzögerung.

3. Verfahren nach einem der vorhergehenden Ansprüche, das Verfahren weiterhin umfassend:

Übermitteln eines Ergebnisses des Validierens der Zeitfunktion des Masters und/oder des dem zweiten Client zugehörigen Masters an eine oder mehrere sicherheitsrelevante Funktionen durch den ersten Client; und/oder

Ausführen der einen oder mehreren sicherheitsrelevanten Funktionen unter Verwendung des Ergebnisses des Validierens der Zeitfunktion.

4. Verfahren nach Anspruch 2, das Verfahren weiterhin umfassend:

Empfangen einer weiteren Validierungsanfragenachricht des zweiten Clients über den zweiten Kommunikationskanal, wobei die weitere Validierungsanfragenachricht folgende Zeitinformationen zwischen dem zweiten Client und einem dem zweiten Client zugehörigen Master umfasst:

eine prädizierte Empfangszeit einer Sync-Nachricht zwischen dem zweiten Client und dem zweiten Client zugehörigen Master; eine synchronisierte Sendezeit der Sync-Nachricht zwischen dem zweiten Client und dem zweiten Client zugehörigen Master;

Validieren der Zeitfunktion des zweiten Clients durch den ersten Client, wobei das Validieren der Zeitfunktion des zweiten Clients umfasst: Bestimmen, ob die prädizierte Empfangszeit der Sync-Nachricht des zweiten Client zuzüglich einer vorgegebenen, maximale Verzögerung zwischen dem zweiten Client und dem zweiten Client zugehörigen Master einen Wert ergibt, der innerhalb eines vorgegebenen Intervallbereichs um die synchronisierte Sendezeit der Sync-Nachricht des dem zweiten Client zugehörigen Masters liegt; und Falls der Wert innerhalb des vorgegebenen Intervallbereichs liegt: Bestimmen der Zeitfunktion des zweiten Client als valide; Falls der Wert nicht innerhalb des vorgegebenen Intervallbereichs liegt:

Bestimmen der Zeitfunktion des zweiten Client als nicht valide; und Übermitteln eines Ergebnisses des Validierens der Zeitfunktion des zweiten Clients an eine oder mehrere sicherheitsrelevante Funktionen durch den ersten Client.

5. Verfahren nach einem der vorhergehenden Ansprüche, wobei das Validieren der Zeitfunktion umfasst:

Bestimmen, ob die synchronisierte Sendezeit der Path-Delay-Request-Nachricht zuzüglich der vorgegebenen, maximalen Verzögerung einen ersten Wert ergibt, der innerhalb eines vorgegebenen Intervallbereichs um die synchronisierte Empfangszeit der Path-Delay-Request-Nachricht liegt; Bestimmen, ob die synchronisierte Sendezeit der Path-Delay-Response-Nachricht zuzüglich der vorgegebenen, maximalen Verzögerung einen zweiten Wert ergibt, der innerhalb des vorgegebenen Intervallbereichs um die synchronisierte Empfangszeit der Path-Delay-Response-Nachricht liegt; und Falls der erste Wert und der zweite Wert innerhalb der jeweiligen Intervallbereiche liegen: Bestimmen der Zeitfunktion des Masters als valide; und Falls der erste Wert und/oder der zweite Wert nicht innerhalb der jeweiligen Intervallbereiche liegen: Bestimmen der Zeitfunktion des Masters als nicht valide.

6. Verfahren nach einem der vorhergehenden Ansprüche, wobei das Netzwerk ein Ethernet-Netzwerk ist; und/oder

wobei der zweite Client ein Client oder eine Bridge ist; und/oder wobei der Master ein Grand-Master oder ein Sub-Master ist.

7. Computer-lesbare Medium zum Validieren einer Zeitfunktion eines Masters in einem Netzwerk eines Fahrzeugs, wobei das Computer-lesbare Medium Instruktionen umfasst, die, wenn ausgeführt auf einem Computer oder einem Steuergerät, das Verfahren nach einem der Ansprüche 1 bis 6 ausführen.

8. System zum Validieren einer Zeitfunktion eines Masters in einem Netzwerk eines Fahrzeugs, wobei das System dazu ausgebildet ist, das Verfahren nach einem der Ansprüche 1 bis 6 auszuführen.

9. Fahrzeug umfassend das System zum Validieren einer Zeitfunktion eines Masters in einem Netzwerk eines Fahrzeugs nach Anspruch 8.

## Claims

1. Method for validating a time function in a network of a vehicle, the method comprising:

determination of a reception time of a synchronization message of a master for synchronization of an item of time information by a first client, wherein the first client is connected to the master via a first communication channel; reception of a follow-up message of the master via the first communication channel by the first client, wherein the follow-up message comprises a transmission time of the synchronization message; determination of a reception time of a further synchronization message of the master by the first client; reception of a further follow-up message of the master via the first communication channel by the first client, wherein the further follow-up message comprises a transmission time of the further synchronization message;

determination of a time function of the first client on the basis of the reception time of the synchronization message, of the reception time of the further synchronization message, of the transmission time of the synchronization message of the received follow-up message and of the transmission time of the further synchronization message of the received, further follow-up message;

determination of a synchronized transmission time of a path delay request message from the first client to the master by way of the time function of the client;

determination of a synchronized reception time of a path delay response message from the master by way of the time function of the client;

reception of a path delay response follow-up message from the master by the first client, wherein the path delay response follow-up message comprises a synchronized reception time of the path delay request message and a synchronized transmission time of the path delay response message;

validation of a time function of the master on the basis of the synchronized transmission time of the path delay request message to the client, of the synchronized reception time of the path delay response message to the client, of the synchronized reception time of the path delay request message to the master, of the synchronized transmission time of the path delay response message to the master, and of a predefined maximum delay between the first client and the master,

prediction of a synchronized reception time of a synchronization message of the master by the first client using the time function of the first client;

validation of the time function of the first client, wherein the validation of the time function of the first client comprises:

determination of whether the predicted synchronized reception time of the synchronization message plus a predefined maximum delay between the first client and the master gives a value that lies within a predefined interval range around the transmission time, contained in the follow-up message, of the master; and

if the value lies within the predefined interval range:

determination of the time function of the first client as valid;

if the value does not lie within the predefined interval range:

determination of the time function of the first client as not valid; and

updating of the time function of the first client on the basis of the reception time of the synchronization message, of the reception time of the further synchronization message, of the transmission time of the follow-up message and of the transmission time of the further follow-up message.

2. Method according to Claim 1, the method furthermore comprising:

reception of a validation request message of a second client via a second communication channel by the first client,

wherein the validation request message comprises the following time information between the second client and a master associated with the second client:

a synchronized transmission time of a path delay request message;
a synchronized reception time of a path delay response message;
a synchronized reception time of a path delay request message; and
a synchronized transmission time of a path delay response message;

determination of a maximum delay between the second client and the master associated with the second client on the basis of a predefined network topology by the first client; and

validation of a time function of the master associated with the second client on the basis of the synchronized transmission time of the path delay request message, of the synchronized reception time of the path delay response message, of the synchronized reception time of the path delay request message, of the synchronized transmission time of the path delay response message, and of the determined maximum delay.

3. Method according to either of the preceding claims, the method furthermore comprising:

transmission of a result of the validation of the time function of the master and/or of the master associated with the second client to one or more safety-relevant functions by the first client; and/or

execution of the one or more safety-relevant functions using the result of the validation of the time function.

4. Method according to Claim 2, the method furthermore comprising:

EP 3 646 493 B1

reception of a further validation request message of the second client via the second communication channel, wherein the further validation request message comprises the following time information between the second client and a master associated with the second client:

a predicted reception time of a synchronization message between the second client and the master associated with the second client;
a synchronized transmission time of the synchronization message between the second client and the master associated with the second client;

validation of the time function of the second client by the first client, wherein the validation of the time function of the second client comprises: determination of whether the predicted reception time of the synchronization message of the second client plus a predefined maximum delay between the second client and the master associated with the second client gives a value that lies within a predefined interval range around the synchronized transmission time of the synchronization message of the master associated with the second client; and if the value lies within the predefined interval range: determination of the time function of the second client as valid; if the value does not lie within the predefined interval range:

determination of the time function of the second client as not valid; and transmission of a result of the validation of the time function of the second client to one or more safety-relevant functions by the first client.

5. Method according to one of the preceding claims, wherein the validation of the time function comprises:

determination of whether the synchronized transmission time of the path delay request message plus the predefined maximum delay gives a first value that lies within a predefined interval range around the synchronized reception time of the path delay request message; determination of whether the synchronized transmission time of the path delay response message plus the predefined maximum delay gives a second value that lies within the predefined interval range around the synchronized reception time of the path delay response message; and if the first value and the second value lie within the respective interval ranges: determination of the time function of the master as valid; and if the first value and/or the second value do not lie within the respective interval ranges: determination of the time function of the master as not valid.

6. Method according to one of the preceding claims, wherein the network is an Ethernet network; and/or

wherein the second client is a client or a bridge; and/or
wherein the master is a grandmaster or a submaster.

7. Computer-readable medium for validating a time function of a master in a network of a vehicle, wherein the computer-readable medium comprises instructions which, when they are executed on a computer or a controller, execute the method according to one of Claims 1 to 6.

8. System for validating a time function of a master in a network of a vehicle, wherein the system is designed to execute the method according to one of Claims 1 to 6.

9. Vehicle comprising the system for validating a time function of a master in a network of a vehicle according to Claim 8.

**Revendications**

1. Procédé de validation d'une fonction temporelle dans un réseau d'un véhicule, le procédé comprenant :

le calcul d'une heure de réception d'un message de type « Sync » d'un maître pour la synchronisation d'une information d'heure par un premier client, dans lequel le premier client est relié au maître via un premier canal de communication ; la réception par le premier client d'un message de type « Follow Up » du maître via le premier canal de communication, dans lequel le message de type « Follow Up » comprend une heure d'envoi du message de type « Sync » ; le calcul par le premier client d'une heure de réception d'un message de type « Sync » supplémentaire du maître ; la réception par le premier client d'un message de type « Follow Up » supplémentaire du maître via le premier canal de communication, dans lequel le message de type « Follow Up » supplémentaire comprend une heure d'envoi du message de type « Sync » supplémentaire ;

la détermination d'une fonction temporelle du premier client sur la base de l'heure de réception du message de type « Sync », de l'heure de réception du message de type « Sync » supplémentaire, de l'heure d'envoi du message de type « Sync » du message de type « Follow Up » reçu et de l'heure d'envoi du message de type « Sync » supplémentaire du message de type « Follow Up » supplémentaire reçu ;

le calcul d'une heure d'envoi synchronisée d'un message de type « Path Delay Request » envoyé du premier client au maître à l'aide de la fonction temporelle du client ;

le calcul d'une heure de réception synchronisée d'un message de type « Path Delay Response » provenant du maître à l'aide de la fonction temporelle du client ;

la réception par le premier client d'un message de type « Path Delay Response Follow-Up » provenant du maître, dans lequel le message de type « Path Delay Response Follow-Up » comprend une heure de réception synchronisée du message « Path Delay Request » et une heure d'envoi synchronisée du message « Path Delay Response » ;

la validation d'une fonction temporelle du maître sur la base de l'heure d'envoi synchronisée du message « Path Delay Request » au client, de l'heure de réception synchronisée du message « Path Delay Response » au client, de l'heure de réception synchronisée du message « Path Delay Request » au maître, de l'heure d'envoi synchronisée du message « Path Delay Response » au maître, et d'une temporisation maximale prédéfinie entre le premier client et le maître ;

la prédiction d'une heure de réception synchronisée par le premier client d'un message de type « Sync » du maître en cas d'utilisation de la fonction temporelle du premier client ;

la validation de la fonction temporelle du premier client, dans lequel la validation de la fonction temporelle du premier client comprend :

la détermination de si l'heure de réception synchronisée prédite du message de type « Sync » donne une valeur, en terme de temporisation maximale prédéfinie, entre le premier client et le maître, qui se situe à l'intérieur d'une plage d'intervalle prédéfinie aux alentours de l'heure d'envoi contenue dans le message de type « Follow Up » du maître ; et

dans le cas dans lequel la valeur se situe à l'intérieur de la plage d'intervalle prédéfinie :

la détermination de la fonction temporelle du premier client comme étant valide ;

dans le cas dans lequel la valeur ne se situe pas à l'intérieur de la plage d'intervalle prédéfinie :

la détermination de la fonction temporelle du premier client comme étant non valide ; et

l'actualisation de la fonction temporelle du premier client sur la base de l'heure de réception du message de type « Sync », de l'heure de réception du message de type « Sync » supplémentaire, de l'heure d'envoi du message de type « Follow Up » et de l'heure d'envoi du message de type « Follow Up » supplémentaire.

2. Procédé selon la revendication 1, le procédé comprenant en outre :

la réception par le premier client d'un message de demande de validation d'un deuxième client via un deuxième canal de communication ;

dans lequel le message de demande de validation comprend les informations d'heure suivantes entre le deuxième client et un maître associé au deuxième client :

une heure d'envoi synchronisée d'un message de type « Path Delay Request » ;

une heure de réception synchronisée d'un message de type « Path Delay Response » ;

une heure de réception synchronisée d'un message de type « Path Delay Request » ; et

une heure d'envoi synchronisée d'un message de type « Path Delay Response » ;

la détermination par le premier client d'une temporisation maximale entre le deuxième client et le maître associé au deuxième client sur la base d'une topologie de réseau prédéfinie ; et

la validation d'une fonction temporelle du maître associé au deuxième client sur la base de l'heure d'envoi synchronisée du message « Path Delay Request », de l'heure de réception synchronisée du message « Path Delay Response », de l'heure de réception synchronisée du message « Path Delay Request », de l'heure d'envoi synchronisée du message « Path Delay Response » et de la temporisation maximale définie.

3. Procédé selon l'une quelconque des revendications précédentes, le procédé comprenant en outre :

la transmission par le premier client d'un résultat de la validation de la fonction temporelle du maître et/ou du maître associé au deuxième client à une ou plusieurs fonctions importantes en terme de sécurité ; et/ou

l'exécution d'une ou de plusieurs fonctions importantes en terme de sécurité en utilisant le résultat de la validation de la fonction temporelle.

4.  Procédé selon la revendication 2, le procédé comprenant en outre :
la réception d'un message de demande de validation supplémentaire du deuxième client via le deuxième canal de communication, dans lequel le message de demande de validation supplémentaire comprend les informations d'heure suivantes entre le deuxième client et un maître associé au deuxième client :

une heure de réception prédite d'un message de type « Sync » entre le deuxième client et le maître associé au deuxième client ;
une heure d'envoi synchronisée du message de type « Sync » entre le deuxième client et le maître associé au deuxième client ;
la validation de la fonction temporelle du deuxième client par le premier client, dans lequel la validation de la fonction temporelle du deuxième client comprend :

la détermination de si l'heure de réception prédite du message de type « Sync » du deuxième client donne, par rapport à une temporisation maximale prédéfinie, une valeur entre le deuxième client et le maître associé au deuxième client et qui se situe à l'intérieur d'une plage d'intervalle prédéfinie aux alentours de l'heure d'envoi synchronisée du message de type « Sync » du maître associé au deuxième client ; et
dans le cas dans lequel la valeur se situe à l'intérieur de la plage d'intervalle prédéfinie :

la détermination de la fonction temporelle du deuxième client comme étant valide ;
dans le cas dans lequel la valeur ne se situe pas à l'intérieur de la plage d'intervalle prédéfinie :

la détermination de la fonction temporelle du deuxième client comme étant non valide ; et
la transmission par le premier client d'un résultat de la validation de la fonction temporelle du deuxième client à une ou plusieurs fonctions importantes en terme de sécurité.

5.  Procédé selon l'une quelconque des revendications précédentes, dans lequel la validation de la fonction temporelle comprend :

la détermination de si l'heure d'envoi synchronisée du message « Path Delay Request » donne, par rapport à la temporisation maximale prédéfinie, une première valeur qui se situe à l'intérieur d'une plage d'intervalle prédéfinie aux alentours de l'heure de réception synchronisée du message « Path Delay Request » ;
la détermination de si l'heure d'envoi synchronisée du message « Path Delay Response » donne, par rapport à la temporisation maximale prédéfinie, une deuxième valeur qui se situe à l'intérieur de la plage d'intervalle prédéfinie aux alentours de l'heure de réception synchronisée du message « Path Delay Response » ; et
dans le cas dans lequel la première valeur et la deuxième valeur se situent à l'intérieur des plages d'intervalle respectives :

la détermination de la fonction temporelle du maître comme étant valide ; et
dans le cas dans lequel la première valeur et/ou la deuxième valeur ne se situent pas à l'intérieur des plages d'intervalle respectives :
la détermination de la fonction temporelle du maître comme étant non valide.

6.  Procédé selon l'une quelconque des revendications précédentes :

dans lequel le réseau est un réseau Ethernet ; et/ou
dans lequel le deuxième client est un client ou un bridge ; et/ou
dans lequel le maître est un grand Maître ou un sous-maître.

7.  Agent de validation lisible par ordinateur d'une fonction temporelle d'un maître dans un réseau d'un véhicule, dans lequel l'agent lisible par ordinateur comprend des instructions qui, lorsqu'elles sont exécutées sur un ordinateur ou un appareil de commande, mettent en œuvre le procédé selon l'une quelconque des revendications 1 à 6.

8.  Système de validation d'une fonction temporelle d'un maître dans un réseau d'un véhicule, dans lequel le système est réalisé pour mettre en œuvre le procédé selon l'une quelconque des revendications 1 à 6.

**9.** Véhicule comprenant le système de validation d'une fonction temporelle d'un maître dans un réseau d'un véhicule selon la revendication 8.

100

108　　　　110　　　　104　　　　110　　　　102

112　　　　　　　　112

114　　　　　　　　114

114

110　112

106

Fig. 1

Fig. 2

EP 3 646 493 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011087472 A1

- US 2010019811 A1

**In der Beschreibung aufgeführte Nicht-Patentliteratur**

- Network-based application-independent time-error and direct port latency measurement. **BOB NOSE-WORTHY.** IEEE International Symposium on Precision Clock Synchronization for Measurement, Control, and Communication (ISPCS). IEEE, 04. September 2016, 1-6

- **PATRICK WUNNER et al.** *Development and Testing of Automotive Ethernet-Networks together in one Tool - OMNeT++,* 03. September 2014
- Passive and Active Probing of Slave Timing Error for 802.1AS. **BOB NOSEWORTHY et al.** IEEE Draft, AS-REN-PROBING-SLAVE-TE-PROPOSAL-1115-V06. IEEE-SA, 20. November 2015, vol. 802, 1-28